# EUROPÄISCHE PATENTSCHRIFT

(11) **EP 1 615 744 B1**
(45) Veröffentlichungstag und Bekanntmachung des Hinweises auf die Patenterteilung: **09.11.2016**
(21) Anmeldenummer: 04727552.4
(22) Anmeldetag: 15.04.2004
(51) Int. Cl.: B23Q 1/00, B23Q 37/00

(54) **SCHNELLSPANNZYLINDER IN MODULBAUWEISE**
MODULAR, RAPID-ACTION CLAMPING CYLINDER
CYLINDRE A SERRAGE RAPIDE DE CONCEPTION MODULAIRE

(30) Priorität: 15.04.2003 DE 10317337
(43) Veröffentlichungstag der Anmeldung: 18.01.2006
(73) Patentinhaber: Andreas Maier GmbH & Co. KG, 70734 Fellbach (DE)
(72) Erfinder: STARK, Emil, A-6840 Götzis (AT)
(74) Vertreter: Hoeger, Stellrecht & Partner Patentanwälte mbB
(86) Internationale Anmeldenummer: PCT/EP2004/003969
(87) Internationale Veröffentlichungsnummer: WO 2004/091849

(56) Entgegenhaltungen:
- EP-A- 0 125 220
- EP-A- 0 976 481
- DE-A- 10 123 270
- DE-U- 20 003 730
- DE-U- 20 219 340
- US-E- R E32 854

## Beschreibung

Die Erfindung betrifft einen Schnellspannzylinder in Modulbauweise nach dem Oberbegriff des Patentanspruchs 1.

Mit der auf den gleichen Anmelder zurückgehenden DE 101 23 270 A1 ist ein Schnellspannzylinder bekannt geworden.

Wie bekannt, dient ein derartiger Schnellspannzylinder zur Einspannung von Werkstückpaletten oder von Spannplatten in dem Schnellspannzylinder, wobei an der Werkstückpalette oder der Spannplatte ein Einzugsmittel angeordnet ist, der in der zentralen Ausnehmung des Schnellspannzylinders klemmend festgelegt wird.

Der hier beschriebene Schnellspannzylinder dient also für allgemeine Verriegelungsaufgaben im Maschinenbau, wo es darum geht, an einen beliebigen Teil angeordneten Einzugsnippel in der zentralen Ausnehmung des Schnellspannzylinders zu verankern.

In der auf den gleichen Erfinder zurückgehenden DE 101 23 270 A1 war bereits nur ein Schnellspannzylinder beschrieben worden, der allerdings aus einer Vielzahl von unterschiedlichen Teilen besteht. Damit ist der Nachteil verbunden, dass er einmal sehr raumgreifend baut, dass heißt große Einbaudimensionen erfordert, und eine Vielzahl von Einzelteilen enthält, die alle sehr aufwendig herzustellen sind. Es bestehen wegen der Vielzahl der vorhandenen Teile auch gegebenenfalls Abdichtprobleme, weil die Teile gegeneinander (Drückölraum und Lufteinlassraum) abgedichtet werden müssen, was mit einer Vielzahl von notwendigen Dichtungen verbunden ist.

Die US Re.32 854 E offenbart einen Schnellspannzylinder gemäß dem Oberbegriff von Anspruch 1.

Der Erfindung liegt die Aufgabe zugrunde, einen Schnellspannzylinder nach dem Oberbegriff des Patentanspruchs 1 so weiterzubilden, dass er mit wesentlich weniger Teilen auskommt, kostengünstiger herstellbar ist und betriebssicherer arbeitet.

Zur Lösung der gestellten Aufgabe ist die Erfindung durch die technische Lehre des Anspruchs 1 gekennzeichnet.

Besondere Ausgestaltungen der Erfindung sind Gegenstand der abhängigen Ansprüche 2 bis 23.

Gemäß der Erfindung ist es vorgesehen, dass die gesamten Einbauten in diesem Bereich als Einsteckmodul ausgebildet sind, welches modulartig in die zentrale Ausnehmung von oben her in das Gehäuse des Schnellspannzylinders eingesetzt werden können.

Ein derartiges Einsteckmodul besteht erfindungsgemäß aus einer Federhalteplatte, welche die Tellerfeder aufnimmt, und einer damit verbundenen Kugelauflage, auf welcher die Sperrkugeln für die Verriegelung des Einzugsnippels aufliegen.

Wenn vorhin angegeben wurde, dass das Einsteckmodul von oben eingesetzt wird, so ist dies nicht einschränkend zu verstehen. Es wird in einer anderen Ausgestaltung vorgesehen, dass die Montage des Schnellspannzylinders dadurch bewerkstelligt wird, dass in das zunächst vorhandene, rohrförmige Gehäuse das Einsteckmodul von oben her eingesetzt wird.

Bei einer Aufbausituation, wenn der Schnellspannzylinder auf einer bestimmten Aufspannfläche befestigt werden soll, wird dies dadurch bewerkstelligt, dass von oben her in das rohrförmige Gehäuse zunächst das Einsteckmodul eingesetzt wird, dann wird der Kolben in das rohrförmige Gehäuse eingesteckt und schließlich die Kugeln auf die Kugelbahnen der Kugelauflage aufgelegt und schließlich dann der Deckel aufgesetzt und festgeschraubt.

Man erkennt bei dieser Montagereihenfolge, dass eine sehr einfache und sichere Montage gegeben ist, weil nur wenige Teile miteinander verbunden werden müssen.

Das vorher genannte Einsteckmodul wird bevorzugt an einer zugeordneten Anschlagfläche an einem rohrförmigen Gehäuse angelegt, wobei diese Anschlagfläche durch eine Vielzahl von Sperrkugeln bewerkstelligt werden kann, die gleichmäßig verteilt am Umfang in einer radial nach innen geöffneten Ringnut am Gehäuse angeordnet sind.

Geht es hingegen um eine Einbausituation, bei welcher der Schnellspannzylinder in einer zentralen Ausnehmung im Maschinentisch eingesetzt wird, dann kann es sogar vorgesehen sein, dass ein rohrförmiges Gehäuse entfällt und der unter Drucköl stehende Kolben unmittelbar an den Seitenwänden der zentralen Ausnehmung im Maschinentisch abgedichtet läuft.

Soll hingegen die Seitenwand der zenträlen Ausnehmung im Maschinentisch nicht hochgenau bearbeitet werden, um eine abgedichtete Lauffläche für den Kolben zu bilden, dann reicht es aus, ein Ringteil einzusetzen, welcher das ringförmige Gehäuseteil in der Aufbausituation ersetzt.

Dies ist vor allem auch dann erforderlich, wenn die drei Ausnehmungen im Maschinentisch Lunker vorhanden sind, welche eine Abdichtung des Kolbens mit seinen Dichtringen an diesen Flächen verhindern.

Derartige Maßnahmen müssen gegebenenfalls auch dann getroffen werden, wenn die Ausnehmung im Maschinentisch gegebenenfalls keine "Hydraulik"-Qualität aufweist.

Bei allen Ausführungsformen ist maßgebend, dass wegen des einfachen Aufbaus nun eine Vielzahl von Möglichkeiten vorhanden sind, wie man unterschiedliche Abwandlungen bewerkstelligen kann. Es handelt sich also um einen modulartigen Aufbau eines Schnellspannzylinders, der insbesondere in einer Ausblas-Version und einer Nicht-Ausblas-Version vorgegehen werden kann.

Das Einsteckmodul kann demzufolge mit unterschiedlichen Bauteilen verbunden werden, die alle eine Lastübertragung nicht teilnehmen.

Soll beispielsweise eine Ausblas-Version für den Schnellspannzylinder verwirklicht werden, dann reicht es aus, auf das Einsteckmodul ein entsprechenden weiteren Boden aufzuschrauben, der sich abdichtend an dem rohrförmigen Gehäuse anlegt und der einen inneren umlaufenden Luftspalt bildet, welcher die Luftverteilung im Innenraum des Schnellspannzylinders übernimmt.

Neben der Möglichkeit des Aufshrraubens eines der Luftführung dienenden Deckels gibt es auch die Möglichkeit, das Einsteckmodul mit seinen Funktionsteilen als Zentrierhilfe oder Montagehilfe für die Verankerung der zugeordneten Bohrbüchsen einer Lochrasterplatte zu verwenden. Hierbei ist es möglich, dass der aufschraubbare Boden ein oder mehrere axial vorspringende Zapfen ausbildet, welche zugeordnete Bohrbüchsen einer Lochrasterplatte eingreifen und damit den Schnellspännzylinder auf dieser Lochrasterplatte festlegen.

Ein derartiger Zapfen dient also in allen Ausführungsformen als Zentrierung für den Schnellspannzylinder auf einer entsprechenden Auflagefläche.

Ebenso ist es möglich bei der Nicht-Ausblas-Version statt des verwendeten luftführenden Bodens einen Adapter mit dem Einsteckmodul zu verbinden, welche Adapter wiederum einen axial vorstehenden Zapfen ausbildet, mit diem dieser wieder in zugeordnete Zentrierausnehmungen einer Lochrasterplatte eingreift.

Der Adapter ist ein besonders schmales und kostengünstig herstellbares Teil, welches sehr einfach mit dem Einsteckmodul verbunden werden kann.

Wegen der vollkommenen Freiheit des zentralen Innenraums des Schnellspannzylinders und irgendwelchen Druckölräumen (weil diese radial nach außen verlegt wurden) ergibt sich nun weiterhin die Möglichkeit, dass aus dem Innenraum entsprechende Ablassöffnungen herausgeführt werden können, aus denen beispielsweise Bohrwasser mit Späne und Verschmutzung tragendes Medium und dergleichen nach unten ablaufen kann.

Ebenso ist es selbstverständlich möglich, in die zentrale Innenbohrung die nach unten geöffnet ist, entsprechend Luft einzublasen, um eine zentrale Luftausblasung aus dem Schnellspannzylinder zu verwirklichen.

In einer anderen Ausgestaltung ist es auch vorgesehen, dass durch die zentrale, nach außen geführte Ausnehmung auch ein Kühlmittel eingeführt wird, welches unter Druck in die zentrale Ausnehmung eingeführt wird. Statt der Ausblasung des Zylinders kann auch ein Ausspritzen mit einem entsprechenden Reinigungsmedium verwirklicht werden.

Das Ausspritzen hat den Vorteil, dass ein Druck mit mehr als 6 bar verwendet werden kann, wodurch eine besonders gute Reinigungswirkung erzielt wird.

Ein weiterer Vorteil der Erfindung ist darin zu sehen, dass ein sogenannter Blockverschluss für den Einzugsnippel im Gehäuse des Schnellspannzylinders erreicht wird. Dies bedeutet, dass kein Lüftungsspiel ab Einzugsnippel besteht, bei dem - nach den bekannten Anordnungen des Standes der Technik - der Nachteil bestand, dass der Einzugsnippel - auch im gesperrten Zustand - noch um einen geringen Verschiebungsweg von zum Beispiel 2 mm aus dem Gehäuse des Schnellspannzylinders herausgezogen werden konnte.

Mit dem erfindungsgemäßen Blockverschluss wird dies vermieden. Die Sperrkugeln für im Schnellspannzylinder werden im gesperrten Zustand in formschlüssiger Art einerseits zugeordneten angehobenen Flächen der Kugelauflage und andererseits an der Unterseite des Deckels eingeklemmt, wodurch sie nicht mehr bewegbar sind und sich in dieser Sperrstellung in definierter Weise in die zugeordnete ringförmige Ausnehmung am Einzugsnippel anlegen. Damit ist dieser absolut gesperrt und spielfrei festgehalten.

Im Folgenden wird die Erfindung anhand von mehrere Ausführungswege darstellenden Zeichnungen näher erläutert. Hierbei gehen aus den Zeichnungen und ihrer Beschreibung weitere Merkmale und Vorteile der Erfindung hervor.

Es zeigen:
- Figur 1:: Schnitt durch eine erste Ausführungsform eines Schnellspannzylinders;
- Figur 2:: die Draufsicht auf den Schnellspannzylinder nach Figur 1;
- Figur 3:: Schnitt durch eine erste Ausführungsform eines Einsteckmoduls;
- Figur 4:: Schnitt durch eine zweite Ausführungsform eines Einsteckmoduls;
- Figur 5:: Schnitt durch eine zweite Ausführungsform eines Schnellspannzylinders (mit topfförmigen Gehäuse);
- Figur 6:: Schnitt durch eine dritte Ausführungsform eines Schnellspannzylinders;
- Figur 7:: Schnitt durch eine vierte Ausführungsform eines Schnellspannzylinders;
- Figur 8:: Schnitt durch eine fünfte Ausführungsform eines Schnellspannzylinders;
- Figur 9:: Schnitt durch eine sechste Ausführungsform eines Schnellspannzylinders;
- Figur 10:: Schnitt durch eine siebte Ausführungsform eines Schnellspannzylinders;
- Figur 11:: Schnitt durch eine achte, nicht unter die beigefügten Ansprüche fallende Ausführungsform eines Schnellspannzylinders;
- Figur 12:: Schnitt durch eine neunte Ausführungsform eines Schnellspannzylinders mit Einbau in einem Maschinentisch;
- Figur 13:: Schnitt durch eine zehnte Ausführungsform eines Schnellspannzylinders mit Einbau in einen Maschinentisch;
- Figur 14:: Schnitt durch eine elfte Ausführungsform eines Schnellspannzylinders mit Einbau in einen Maschinentisch;
- Figur 15:: Schnitt durch die zwölfte Ausführungsform eines Schneltspannzylinders mit Einbau in einen Maschinentisch;
- Figur 16:: Schnitt durch eine dreizehnte Ausführungsform eines Schnellspannzylinders mit Einbau in einen Maschinentisch.

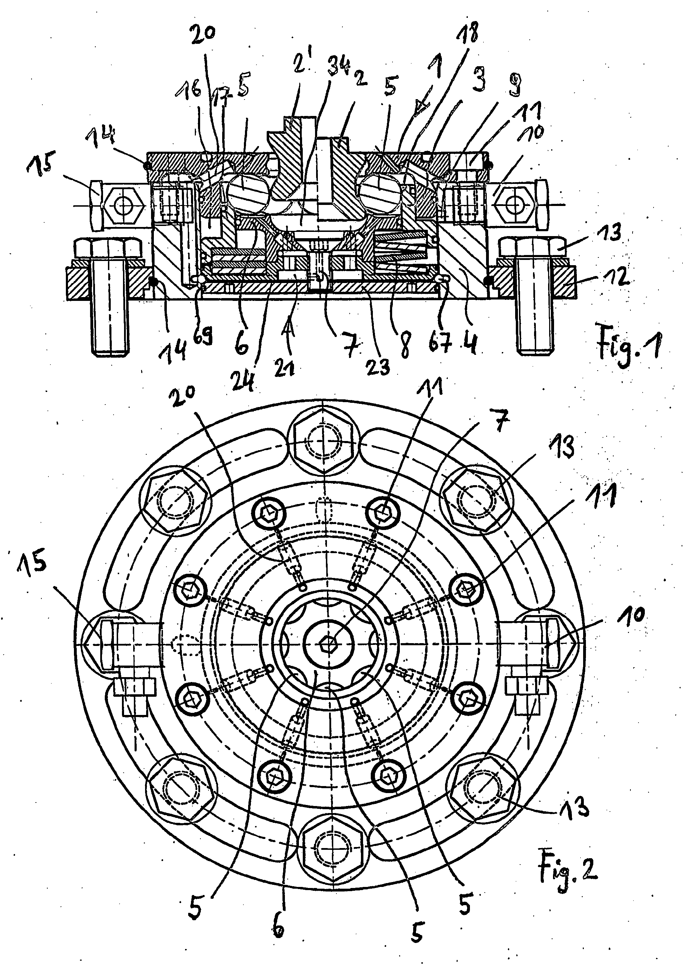

In Figur 1 und 2 ist allgemein eine erste Ausführungsform eines Schnellspannzylinders dargestellt, der im wesentlichen aus einem etwa rohrförmigen Gehäuse 4 besteht, welches mittels gleichmäßig verteilt am Umfang angeordneter Schrauben 13 und einer Spannpratze 12 auf einer nicht näher dargestellten Befestigungsfläche festgelegt wird. In die zentrale Ausnehmung 34 des Schnellspannzylinders ist ein Einzugsnippel 2 einfahrbar, der in der Stellung 2' im ausgefahrenen und entriegelten Zustand und in der Stellung 2 im verriegelten Zustand dargestellt ist.

Am Außenumfang des rohrförmigen Gehäuses 4 ist hierbei ein Sicherungsring 14 angeordnet an den sich die Spannprätze 12 klemmend anlegt.

Im Innenraum des Gehäuses 4 ist ein Kolben 3 verschiebbar angeordnet, wobei der Kolben 3 ein axial nach oben verlängerten Ringansatz 17 ausbildet, dessen radialen Außenflächen mit zugeordneten Ohrringen an der zugeordneten Innenwandung des Deckels 1 anliegend und dort abgedichtet verschiebbar geführt

Der untere Teil des Kolbens 3 ist radial erweitert und legt sich abgedichtet an den Innenumfang des Gehäuses 4 an. Hierdurch wird ein Druckraum 16 für das Öl zwischen der Unterseite des Deckels 1, dem Ringansatz des Kolbens 3 und dem Gehäuse 4 ausgebildet. Dieser Druckraum 16 ist deshalb sehr schmal und läuft ringsum um und ist weitestmöglichst radial nach auswärts verlegt.

Ein eventuell hoher Druck in diesem Druckraum 16 führt deshalb nicht zu einem unerwünschten Aufwölben des Deckels 1, weil der Druckraum maximal radial weit auswärts an der Innenseite des Gehäuses 4 ausgebildet ist.

Weil der radiale Abstand zwischen dem Druckraum 16 und den Schrauben 11 zur Festlegung des Deckels 1 auf dem Gehäuse 4 sehr gering ist, ergibt sich dadurch ein sehr geringer Hebelarm, so dass die Aufwölbung des Deckels 1 nicht zu befürchten ist.

Durch die Tatsache bedingt, dass der Druckraum 16 unterhalb des Deckels angeordnet ist und der Kolben einen radialen einsatzversetzten Ringansatz 17 und einen radial auswärtsversetzten Ansatz ausbildet, ergibt sich im Zwischenraum zwischen diesen beiden zueinander versetzten Teilen des Kolbens 3 der maximale Querschnitt des Deckels, der damit im Bereich des Druckraums eine besonders hohe Materialstärke aufweist, was einen unerwünschten Aufwölbung entgesetzt ist.

Der Druckraum 16 hat daher nur einen sehr geringen Ölinhalt, so dass mit geringem Drucköl eine Vielzahl von in einem Maschinentisch 53 angeordnete Schnellspannzylinder versorgt werden können. Es ist also nur ein geringes Ölschluckvolumen vorhanden.

Wichtig ist, dass an der Innenseite des axialen Ringansatzes 17 des Kolbens 3 nun eine Vielzahl von Kugeln 5 anliegen, die von diesem Ringansatz entweder radial einwärts auf den Einzugsnippel 2 zugestellt oder von diesem weggestellt werden. Hierzu sind entsprechend Kugellaufbahnen auf einer Kugelauflage 6 ausgebildet, die Vertiefungen für die Kugeln bilden.

Im entriegelten Zustand (gemäß dem linken Halbschnitt in Figur 1) liegen die Kugeln 5 in den vertieft angeordneten Kugelauflagen drinnen und haben demgemäss einen Abstand zu der Unterseite des Deckels 1.

Im linken Halbschnitt ist dies allerdings nicht dargestellt, weil dort der untere Ansatz des Einzugsnippels die Kugel noch gegen die Unterseite des Deckels zieht. Ist jedoch dieser radial auswärtsgerichtete Ansatz des Einzugsnippels 2 an der Kugeln 5 vorbeigelaufen, dann fällt diese in die vertiefte kugelförmige Ausnehmung auf der Oberfläche der Kugelauflage 6 hinein.

Der radiale Ansatz an der Unterseite des Einzugsnippels 2 sorgt im übrigen auch für eine Bewegung der Kugel in die Sperrrichtung in Verbindung mit dem Ringansatz 17 des Kolbens 3.

In der verriegelten Stellung gemäß dem rechten Halbschnitt in Figur 1 finden sich die Kugeln 5 in der Eingriffsstellung mit dem Einzugsnippel 2. Wie aus Figur 1 zu entnehmen ist, bilden die Kugeln in der Sperrstellung einen Blockverschluss, weil sie sich vollständig und spielfrei einerseits zwischen der Kugelauflage 6 und andererseits an der Unterseite des Deckels 1 festklemmen und hierbei formschlüssig sich an der umlaufenden Nut am Einzugsnippel 2 anlegen.

Diese umlaufende Nut bildet eine entsprechende zur Längsache des Einzugsnippels geneigt ausgebildete Schräge.

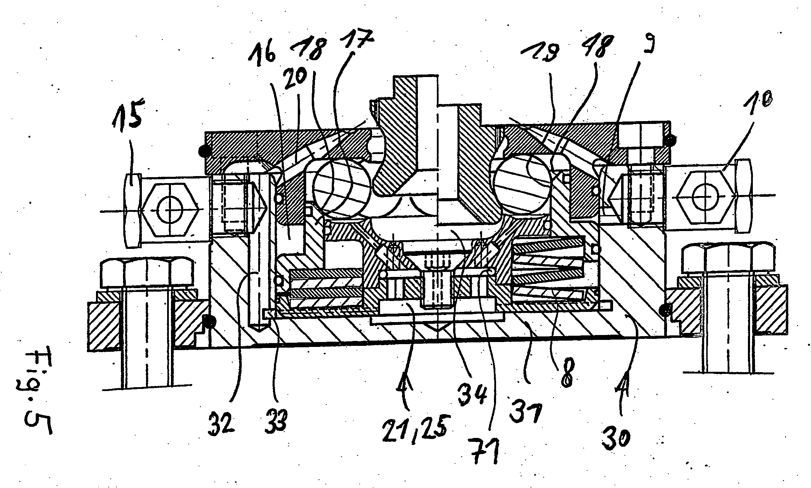

Der Vergleich der Figur 1 mit Figur 5 zeigt im übrigen das an der Innenseite des axialen Ringansatzes 17 des Kolbens 3 zwei hintereinanderliegende Schrägen angeordnet sind. Zunächst ist eine Schräge 19 mit einem Winkel von etwa 5° zur senkrechten vorgesehen, die axial auswärts gerichtet in eine flachere Schräge 18 mit einem Winkel von zum Beispiel 45° zür vertikalen übergeht.

Bei der Verriegelungsbewegung des kolbens 3 bei axial auswärtsgerichtete Bewegung wird sich zunächst die größere Schräge 18 an die Kugeln 5 anlegen und diese radial einwärts in Richtung auf den Einzugsnippel 2 bewegen. Dies wird als Schnellhub bezeichnet. Sobald sich die Kugeln 5 dann formschlüssig an der zugeordneten Schräge am Einzugsnippel 2 anlegen legt sich auch die Schräge 19 am Umfang der Kugeln an und mit dieser Schräge 19 wird die relativ große Federkraft der Feder 8 (Tellerfeder) auf die Kugeln übertragen und zwar in einem Verhältnis von 6,5:1. Das heißt die Federkraft der Feder 8 wird um das 6,5-fache auf die Kugeln 5 übersetzt, die mit eben entsprechender großer Verriegelungskraft sich einen Einzugsnippel 2 anlegen.

Damit wird der Nippel beispielsweise, mit einer Verriegelungskraft von 2 Tonnen in der Verriegelungsstellung gehalten.

Es handelt sich also um das bisher einzige Schnellspannsystem, welches einen Blockverschluss darstellt und eine Einzugskraft auf den Einzugsnippel 2 in verriegelter Stellung ausübt.

Damit wird der Vorteil erreicht, dass bei verzogenen Paletten, die mit dem Einzugsnippel 2 heruntergezogen werden, diese gewaltsam geradegerichtet werden. Gleichzeitig wird eine unerwünscht Vibration des Fräsers vermieden.

Der Druckraum 16 wird mit Drucköl über einen radial außen ansetzenden Ölanlass 10 verbunden, wobei das Drucköl über eine Ölbohrung 9 in den Druckraum gelangt.

Wenn vorstehend der Begriff "Drücköl verwendet wird, so ist dies nicht einschränkend zu verstehen. Statt des Drucköl" können selbstverständlich alle anderen flüssigen Medien für die Versorgung des Druckraums 16 verwendet werden, insbesondere auch Glykol, Gas, Wasser und dergleichen mehr.

Wichtig ist, dass gegenüberliegend zu dem in horizontaler Richtung in das Gehäuse 4 einmündenden Öleinlass 10 auf der gegenüberliegende Seite ein gleichfalls horizontal einmündender Lufteinlass 15 vorhanden ist. Mit dieser im wesentlichen auf gleicher Ebene liegende Lufteinlass wird der Vorteil erreicht, dass hier ebenfalls in einem zentralen Maschinentisch 53 eine entsprechende horizontale Bohrung für die Luftführung vorgesehen werden kann, ohne das es hierfür vertikale Verbindungsbohrungen oder Steigbohrungen benötigt, die mit entsprechenden Verschlüssen nachträglich verschlossen werden müssen. Es bestehen also die gleichen Vorteile bei der Anbringung des Lufteinlasses 15, wie sie vorstehend anhand des Öleinlasses 10 geschildert wurden.

Über den Lufteinlass 15 wird Pressluft in eine zugeordnete Fallbohrung 32 eingeleitet und diese Pressluft wird dann noch in der später zu beschreibenden Weise in den Innenraum des Gehäuses des Schnellspannzylinders verteilt und unterschiedlichen Ausblasstellen zugeführt.

Statt der Einführung von Pressluft über den Lufteinlass 15 kann selbstverständlich über diesen Einlass auch ein Kühlmittel in den Innenraum eingeführt werden und an entsprechenden Ausblasstellen (Ausspritzstellen) ausgespritzt werden.

Die Figur 2 zeigt beispielsweise das von der in Figur 5 gezeigten Fallbohrung 32 auch schräg nach oben gerichtete Schrägbohrungen 20 versorgt werden, welche schräg gegen den Einzugsnippel 2 gerichtete Ausblasstellen versorgen.

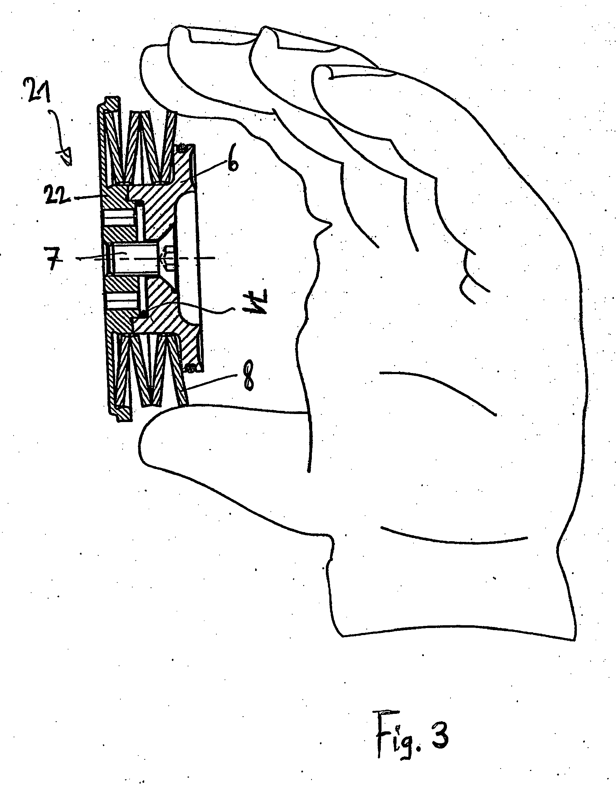

Die Figur 1 zeigt ein erstes Ausführungsbeispiel für ein sogenanntes Einsteckmodul 21, welches in Figur 3 näher dargestellt ist. Dieses Einsteckmodul ist besonders vorteilhaft dann, wenn es darum geht eine Schräge oder eine stehende Montage oder eine Überkopf-Montage für den Schnellspannzylinder zu bewerkstelligen. Das Einsteckmodul hat den Vorteil, dass die wesentlichen Funktionsteile alle in einem einzigen Teil zusammengehalten sind und dieses Teil als ganzes ausgewechselt werden kann, wenn irgendwelche Schäden entstehen. Außerdem ist die Montage der gesamten Einheit wesentlich einfacher.

Gemäß Figur 1 und 3 besteht das Einsteckmodul 21 aus einer unteren Federhalteplatte 22, welche eine ringförmige Aufnahme für die als Tellerfeder ausgebildete Feder 8 ausbildet. Das andere Ende dieser Feder 8 legt sich an der Unterseite der Kugelauflage 6 an, so dass die Feder 8 zwischen diesen beiden Teilen 6, 22 definiert fest gespannt ist und unter großer Vorspannung festgehalten wird. Die beiden Teile werden durch die Schraube 7 zusammengehalten und vorgespannt.

Die Figur 1 zeigt im übrigen die weiferen Vorteile des Einsteckmoduls, weil dort eine längere Schraube 7 verwendet wird, deren bolzenseitiges Ende aus dem Einsteckmodul 21 herausschaut. Auf dieses bolzenseitige Ende kann nun ein Boden 23 aufgeschraubt werden, der sich mit einem entsprechenden Dichtring 69 an der Innenseite des Gehäuses 4 anlegt und im übrigen sich unterhalb der Starrkugeln 67 anlegt, welche Sperrkugeln das Wiederlager für das Einsteckmodul im Gehäuse 4 bilden.

Statt dieser Sperrkugeln kann selbstverständlich auch ein Sicherungsring verwendet werden. Wenn nun ein derartiger Boden 23 auf die Schraube 7 aufgeschraubt wird, ergibt sich an der innenseite des Bodens ein Luftspalt 24, über dem die Blasluft von der Fallbohrung 32 in die zentrale Ausnehmung 34 des Gehäuses eingeleitet werden kann.

Dieser Boden 23 dient also nicht der Lastaufnahme, sondern lediglich der Luftführung.

Weil er nicht an der Lastaufnahme teilnimmt, kann er auch entsprechend durchbohrt sein, kann Zuführungsbohrungen oder Abführungsbohrungen aufweisen über die entweder über die entweder Kühlmittel zugeführt oder entsprechende Wasser ohne Späne aus der zentralen Ausnehmung 34 abgeführt wird.

Der Luftspalt 24 an der Oberseite des Bodens 23 mündet übrigens radial auswärts in eine radial im Gehäuse 4 vertieft angeordneten Nut, in welcher ringförmig der Luftstrom geführt wird, wobei in der gleichen Nut die vorher erwähnten Sperrkugeln 67 angeordnet sind.

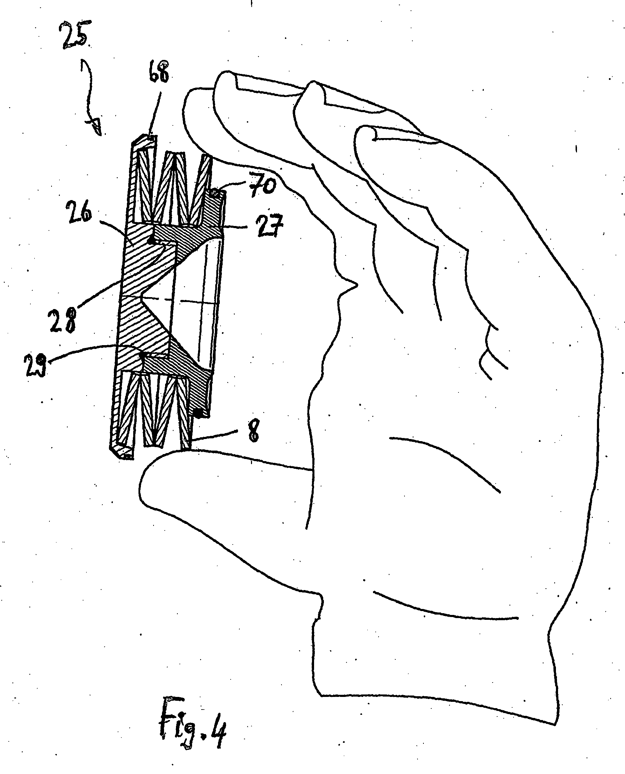

In Figur 4 ist eine andere Ausführungsform eines Einsteckmoduls 25 dargestellt, welches im wesentlichen wiederum aus einer unteren Federhalteplatte 26 besteht, die radial einwärts ein axiales Gewinde trägt, auf welches die obere Kugelauflage 27 aufgeschraubt ist.

Am Außenumfang der Federhalteplatte 26 ist ein Dichtring 68 eingebracht, der sich abdichtend an der Innenseite des Gehäuses 4 anlegt. Dieser Dichtring soll verhindern, dass von der Unterseite des Schnellspannzylinders Wasser oder Schmutz oder Luft in den Federraum der Feder 8 gelangt.

Der am Außenumfang der Kugelauflage 27 angeordnete Dichtring 70 hat die Aufgabe eine Selbsthemmung des Einsteckmoduls an der Innenseite des Gehäuses 4 zu bewerkstelligen, wenn beispielsweise bei Über-Kopf-Montage das Einsteckmodul 25 in die zentrale Ausnehmung 34 im Gehäuse 4 eingesteckt wird. Damit wird verhindert, dass das Einsteckmodul 25 wieder herausfällt. Die gleichen Aufgabe hat im übrigen auch der Dichtring 68 an der Federhalteplatte 26.

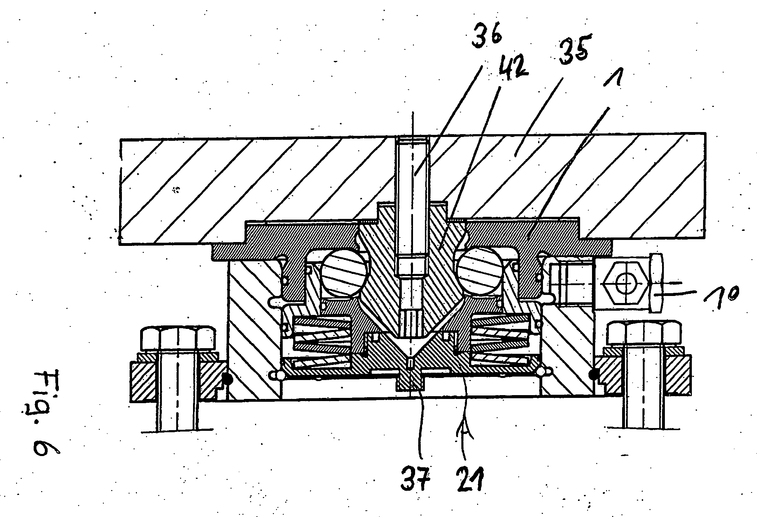

Die zentrale Mittenausnehmuhg in dem Einsteckmodul 25 ist an einer Formgebung eines anderen Einzugsnippels angepasst, der als Fangnippel 42 in Figur 6 dargestellt ist.

Die Figur 5 zeigt als weiteres Ausführungsbeispiel für einen Schnellspannzylinder nach der Erfindung, dass statt eines der Luftführung dienenden Bodens 23 auch das Gehäuse 4 durch ein topfförmiges Gehäuse 30 ersetzt werden kann.

Dieses Gehäuse 30 ist also als Topf ausgebildet und bildet einen Boden 31, der werkstoffeinstückig mit den umlaufenden topfförmigen Seitenwänden verbunden ist.

Die gesamte Montage erfolgt von oben, dass heißt bei entfernten Deckel 1 wird zunächst das wahlweise verwendete Einsteckmodul 21, 25 in den Innenraum eingesteckt und sonach dann die anderen Teile montiert, wie zum Beispiel nachfolgend der Kolben 3 und die Kugeln 5, wonach dann der Deckel 1 aufgesetzt und mit den zugeordneten. Schrauben festgeschraubt wird.

Auch bei dieser Ausführungsform ist dargestellt, dass der Öleinlass 10 radial auswärts in das Gehäuse 30 einmündet und in einem dichten Abstand unterhalb des Deckels 1 angeordnet ist, um so entsprechende Druckkräfte gut vom Deckel aufnehmen lassen zu können.

In Bezug auf das Einsteckmodul 25 in Figur 4 wird noch angefügt, dass auch zwischen den beiden Teilen 26, 27 eine Dichtung 29 angeordnet ist, um zu verhindern, dass bei einer wassergefüllten Kugelauflage dieses Wasser nicht in den Federraum der Feder 8 hineingelangt.

Die Figur 5 zeigt im übrigen, dass am Einsteckmodul 21, 25 noch eine innenliegende Dichtung 71 vorhanden ist, welche verhindert, Luft oder Schmutz in den Federraum der Feder 8 gelangt.

Die Figur 6 zeigt die verblüffende Einfachheit einer Nicht-Ausblas-Version eines Spannzylinders nach der Erfindung. Dort ist dargestellt, dass der Einzugsnippel 2 mit einem Gewindestift 36 in einer zugeordneten Ausnehmung an der Werkstückpalette 35 festgeschraubt ist. Auf der Oberseite der Werkstückpalette 35 sind über nicht näher dargestellte Spannwerkzeuge die zu bearbeitenden Werkstücke angeordnet.

In der Unterseite der Werkstückpalette 35 ist eine etwa quadratische Ausnehmung angeordnet, in welche der Deckel 1 formschlüssig und verdrehungsgesichert eingreift. Ebenso ist dargestellt, dass der vorher gezeigte Einzugsnippel 2 nun an Fangnippel 42 ausgebildet ist, der mit entsprechenden, erweiterten Einführschrägen ein verbessertes Einfahren in die zentrale Ausnehmung im Deckel 1 gewährleistet. Auch bei entsprechenden Seitenversatz führen diese Einführschrägen an den Fangnippel 42 dazu, dass ein lagenrichtiges Einfahren des Fangnippels 42 in die zentrale Ausnehmung des Schnellspannzylinders erfolgen kann.

Die Ausführung zeigt im übrigen ein Einsteckmodul 21, an dessen Unterseite werkstoffeinstückig ein Gewindeansätz 37 angeordnet ist, auf den beispielsweise ein Boden aufgeschraubt werden kann, so wie dies anhand des Bodens 23 in Figur 1 dargestellt wurde. Dieser Boden dient dann für die Vervollständigung der in Figur 6 dargestellten Version, wenn eine Ausblas-Version verwirklicht werden soll.

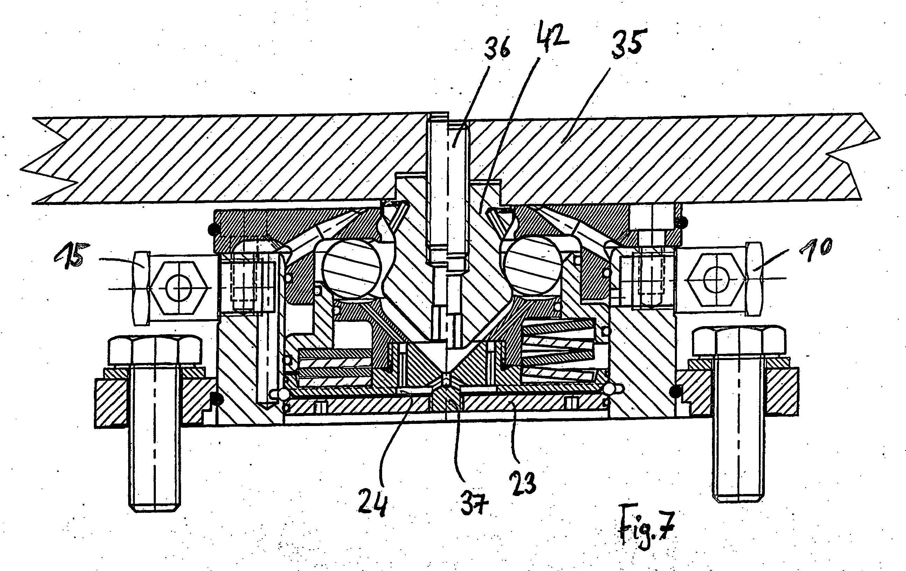

Die Figur 7 zeigt eine dementsprechende Abwandlung, wo erkennbar ist, dass an dem Einsteckmodul der Zapfen 37 angeordnet ist und der Boden 23 aufgeschraubt ist. Über den vorher beschriebenen Lufteinlass 15 wird daher Luft über den Luftspalt 24 verteilt.

Anstatt des Bodens 23 kann auch ein Boden 31 verwendet werden, der werkstoffeinstückig mit einem axial nach unten gerichteten Zapfen 39 verbunden ist, wobei der Boden wiederum auf das gewindeseitige der Schrauben 7 aufgeschraubt ist.

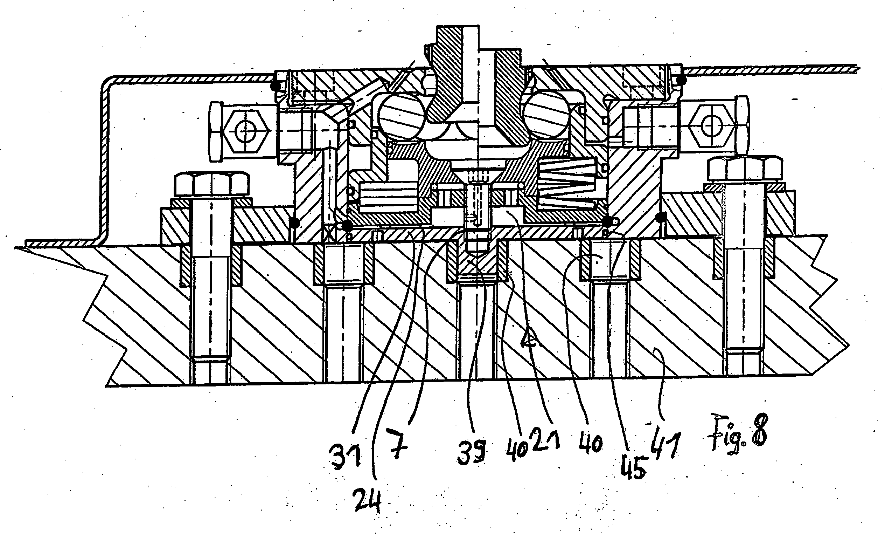

Der am Boden angeordnete Zapfen 39 greift in eine zugeordnete Bohrbüchse 40 im Bereich einer Lochrasterplatte 41 ein. Auf diese Weise kann der in Figur 8 dargestellte Schnellspannzylinder auf den unterschiedlichen Lochrasterbohrungen welche durch die Bohrbüchsen 40 gebildet sind, zentriert werden.

Die Luftverteilung in den Luftspalt 24 erfolgt im übrigen ausgehend von der Fallbohrung 32 über einen radiäl auswarts sich erstreckenden Einstich 33, der luftschlüssig den horizontalen Luftspalt 24 mit der vertikalen Fallbohrung 32 verbindet.

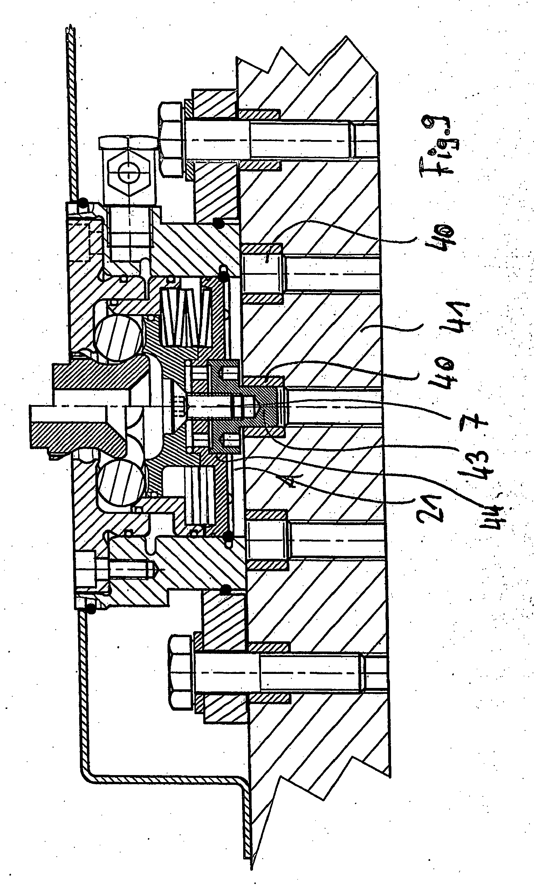

Die Figur 9 zeigt, dass anstatt des Bodens 31 das Einsteckmodul 21, 25 auch unmittelbar mit einem Adapter 43 verbunden ist, der mit seinem einen Teil auf das Gewindeende der Schraube 7 aufgeschraubt ist und der mit seinem anderen, zapfenartigen Ansatz wiederum in die Bohrbüchse 40 eingreift.

Eine derartige Ausführungsform wird dann bevorzugt, wenn auf eine Luftausblasung verzichtet wird.

Der Adapter 43 ist im übrigen in einer Zentrierausnehmung 44 spielfrei an der Unterseite des Einsteckmoduls 21, 25 gelagert, um so ebenfalls eine spielfreie Zentrierung des Schnellspannzylinders auf einer zugeordneten Aufspannfläche zu erreichen.

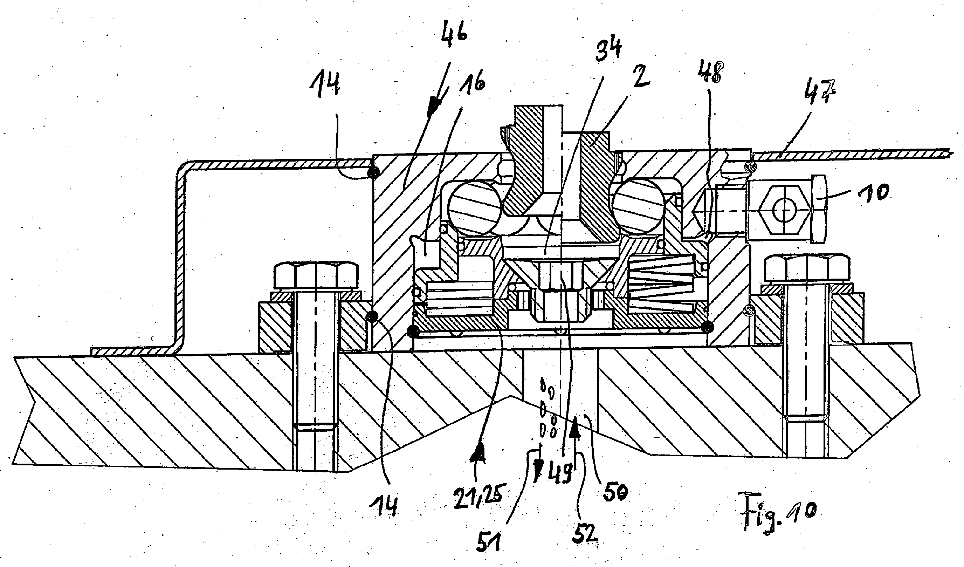

Die Figur 10 zeigt im übrigen, dass die Oberseite des Schnellspannzylinders durch ein Abdeckblech 47 abgedeckt werden kann und dieses durch einen entsprechenden Sicherungsring 14 gehalten wird. Der gleiche Sicherungsring 14 findet sich auch an der Unterseite, um die Spannpratze 12 mit dem Gehäuse des Schnellspannzylinders festzulegen.

Die Figur 10 zeigt ferner, dass die zentrale Ausnehmung 34 des Schnellspannzylinders nach unten auch geöffnet werden kann, um so entweder einen Flüssigkeitsablauf in Pfeilrichtung 51 zu gewährleisten oder auch um entsprechend Luft oder Kühlmittel oder andere Medien in Pfeilrichtung 52 von unten her zuzuführen. Zu diesem Zweck weist das Einsteckmodul eine zentrale Ausnehmung 49 auf und diese Ausnehmung setzt sich nach unten fort in einer Bohrung 50 in der Aufspannplatte oder dem Maschinentisch, so dass durch diese Bohrung 50 hindurch entweder ein Flüssigkeitsablauf geschaffen wird oder eine entsprechende Medienzufuhr.

Das Gehäuse 46 ist im übrigen topfförmig ausgebildet, dass heißt der Deckel ist werkstoffeinstückig mit dem rohrförmigen umlaufenden Ringflansch verbunden, und dieses topfförmige Gehäuse 46 wird mit der Unterseite nach unten auf die Aufspannplatte aufgelegt und mit den Spannpratzen 12 festgelegt.

Die Figur 10 zeigt im übrigen, dass es besonders einfach ist über den radial ansetzenden Öleinlass 10 das Öl über einen zugeordneten Öldurchlass 48, der lediglich ein Freistich ist, in den Druckraum 16 einzuführen.

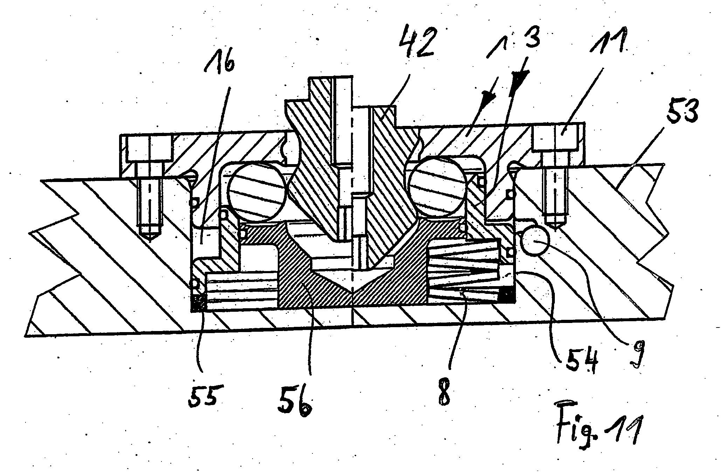

Die Figur 11 zeigt als weitere, nicht unter die beigefügten Ansprüche fallende Ausführungsform, dass alle vorher dargestellten Ausführungen eines Schnellspannzylinders auch vertieft in einer zentralen Ausnehmung 54 in einem Maschinentisch 53 angeordnet werden können.

Auch ergibt sich die bestehend einfache Konstruktion aus der Zeichnung nach Figur 11. Es ist erkennbar, dass der Innenumfang der Ausnehmung 54 direkt als Kolbendichtfläche und Kolbenlauffläche für den Kolben 3 verwendet wird und dass in dieser zentralen, nach oben offene Ausnehmung 54 das Einsteckmodul 21, 25 eingesteckt werden kann.

Ebenso ist es natürlich auch möglich, eine einzige Kugelauflage 56 in die zentrale Ausnehmung 54 einzusetzen wodurch ein Bauteil in Bezug auf das Einsteckmodul 21, 25 eingespart wird, nämlich die Federhalteplatte 22.

Die zu sichernde Feder 8 wird deshalb direkt unterhalb der Kugelauflage 56 gehalten und der Kolben läuft abgedichtet einerseits an einer radialen Aussenfläche der Kugelauflage 56 und andererseits an einer radialen Innenfläche der zentralen Ausnehmung 54.

Ferner läuft der Kolben 3 mit seinem Ringflansch 17 abgedichtet an der Innenseite des Deckels 1 entlang, wodurch sich ein besonders einfacherer Aufbau für den Druckraum 16 ergibt.

In den Innenraum der Ausnehmung 54 wird im Übrigen noch Anschlagring 55 eingelegt, welcher als Anschlagfläche für den Kolben 3 dient.

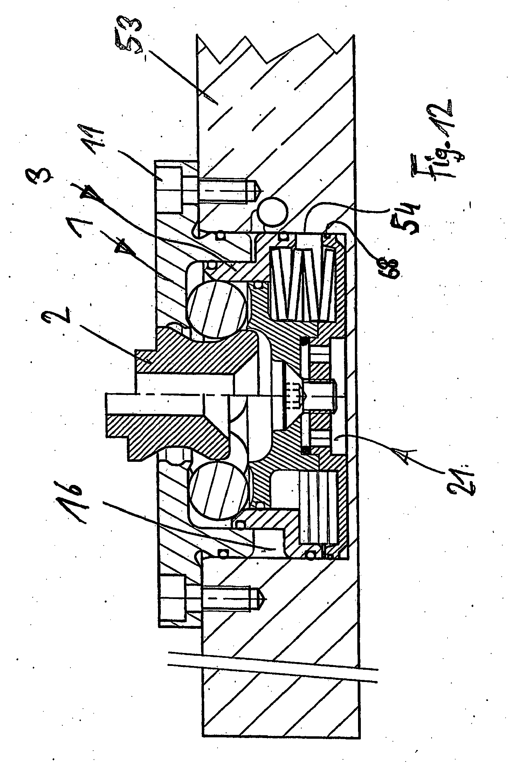

Diese Ausführungsform ist nicht Über-kopf-einbaubar. Geht es um einen Über-Kopf-Einbau, wird die Ausführung nach Figur 12 bevorzugt. Hier wird ein Einsteckmodul 21, 25 verwendet, welches mit seinen vorher beschriebenen radial außenliegenden Dichtringen sich klemmend an den Innenumfang der Ausnehmung 54 anlegt und daher gegen herausfallen aus der Ausnehmung - auch bei Über-Kopf-Montage-gesichert ist.

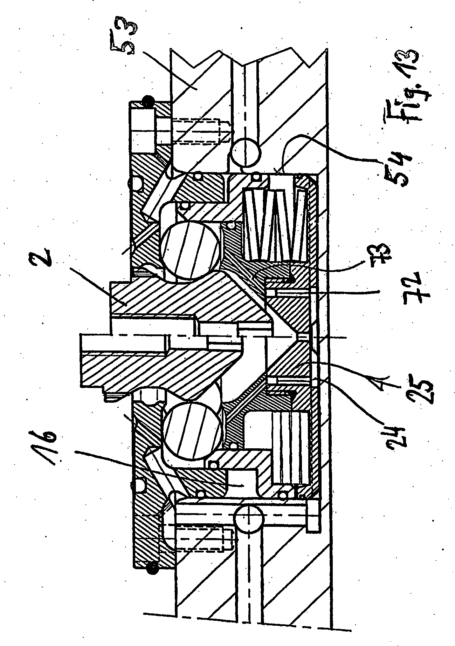

Die Figur 13 ist die Ausblasversion der Ausführung nach Figur 12 dargestellt. Dort ist erkennbar, dass das Einsteckmodul 25 gleichzeitig einen luftführenden Boden für die Ausblasluft bildet, weil sich der luftführende Luftspalt 24 auf der Ebene des Bodens des Aufsteckmoduls bildet.

Vor dem Luftspalt 24 geht vertikal aufwärts eine Steigbohrung 72, die in zugeordnete Schrägbohrungen 73 einmundet. Auf diese Weise kann der gesamte Innenraum des Schnellspannzylinders mit Luft versorgt werden, welche den entsprechenden Ausblasstellen zugeführt wird.

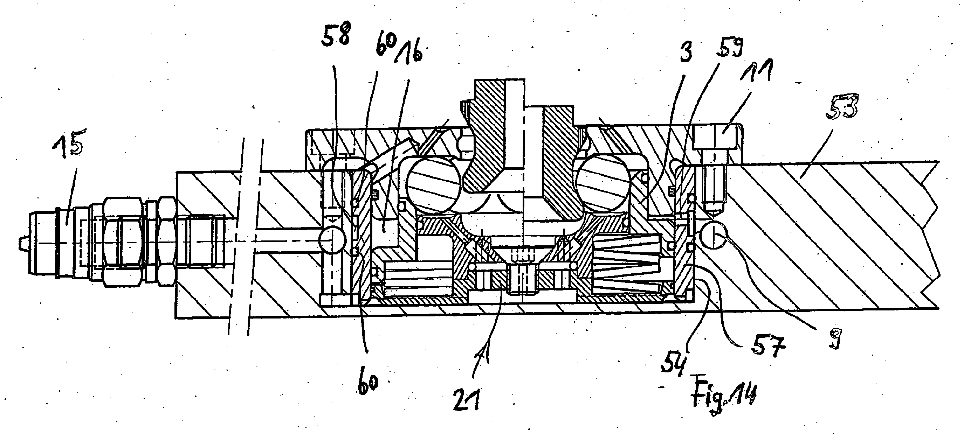

Die Figur 14 zeigt als weitere Ausführungsform für einen Schnellspannzylinder eine Ausführung, die dann verwendet, wird, wenn der Maschinentisch 53 nicht ölhydrauliktauglich. Es können zum Beispiel im Bereich der Ausnehmung 54 Junker vorhanden sein, welcher eine abdichtende Führung des Kolbens 3 mit seinen Dichtringen an dieser Fläche verhindern. Aus diesem Grunde sieht die Erfindung vor, dass zunächst in die zentrale Ausnehmung 54 ein zylinderförmiges Rohrgehäuse 57 abdichtend eingesetzt wird, welches die radial auswärtsgerichtete Dicht- und Führungsfläche für den Kolben 3 bildet.

Das Rohrgehäuse 57 ist mit seinem Außenumfang mit entsprechenden Abdichtungen 60 versehen, bei denen sich abdichtend an der Innenwand der Ausnehmung 54 anlegt.

Die Ölzufuhr erfolgt über die Ölbohrung 9, den Ringkanal 58 und die Verbindungsbohrung 59 in den Druckraum 16.

In gleicher Weise kann auch von der anderen Seite her die Luftzuführung verwirklicht werden, wobei über den Lüfteinlass 15 über eine Steigbohrung die entsprechenden luftführenden Kanäle im Innenraum des Schnellspannzylinders versorgt werden.

Anstatt eines rohrförmigen Gehäuses 57 kann auch ein topfförmiges Gehäuse 61 verwendet werden, welches neben den Ringflansch nach Figur 14 auch gleich werkstoffeinstückig mit einem durchgehenden Boden 62 verbunden ist.

Der Boden 62 bildet gleichzeitig die Federauflage 63 für die Feder 8 und es genügt dann nur noch, diesen Boden 62 über die vorher beschriebene Schraube 7 mit einer zugeordneten Kugelauflage 6 zu verbinden.

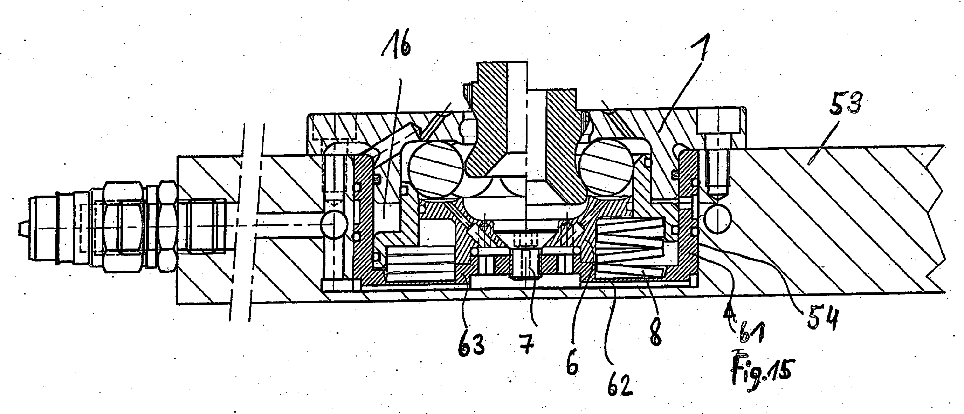

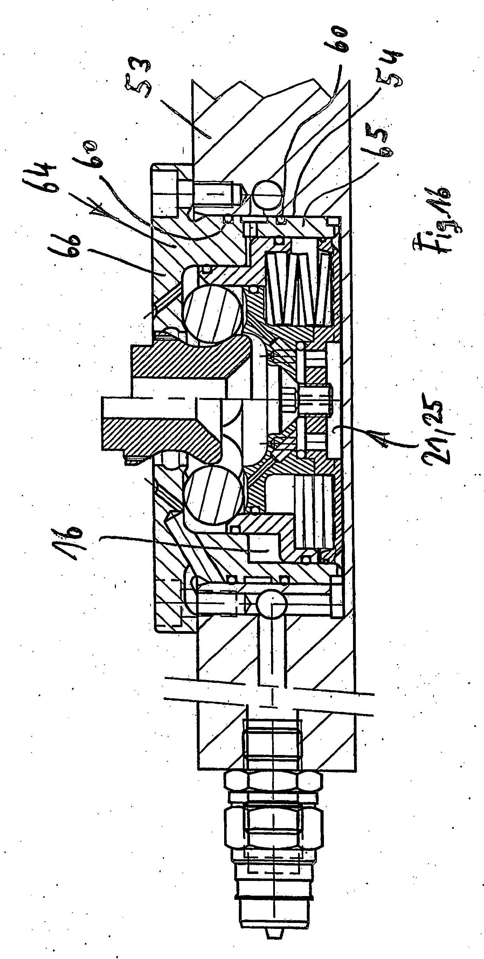

Die Figur 16 zeigt im Vergleich zu Figur 14 und 15 das auch die analoge Umkehrung verwendet werden kann, namlich dass nicht ein Topfgehäuse 21 verwendet wird, sondern ein topfförmiger Deckel, der demzufolge ein anderes Topfgehäuse 64 bildet. In diesem Fall ist der Deckel 66 werkstoffeinstückig mit einem Ringflansch 65 verbunden und bildet so das Topfgehäuse 64, welches von oben in die zentrale Ausnehmung 54 hineingesetzt wird und dort mit den Abdichtungen 60 sich an der Innenwandung 54 anlegt.

Das Einsteckmodul 21 ist standartmassig vorhanden und kann selbstverständlich durch das Einsteckmodul 25 zersetzt werden.

**Zeichnungslegende**

| | | | |
|---|---|---|---|
| 1 | Deckel | 38 | Boden |
| 2 | Einzugsnippel 2' | 39 | Zapfen |
| 3 | Kolben | 40 | Bohrbuchse |
| 4 | Gehäuse | 41 | Lochrasterplatte |
| 5 | Kugel | 42 | Fangnippel |
| 6 | Kugelauflage | 43 | Adapter |
| 7 | Schraube | 44 | Zentrierausnehmung |
| 8 | Feder | 45 | Zentrierfläche |
| 9 | Ölbohrung | 46 | Gehäuse |
| 10 | Öleinlass | 47 | Abdeckblech |
| 11 | Schraube | 48 | Öldurchlass |
| 12 | Spannpratze | 49 | Ausnehmung |
| 13 | Schraube | 50 | Bohrung |
| 14 | Sicherungsring | 51 | Pfeilrichtung |
| 15 | Lufteinlass | 52 | Pfeilrichtung |
| 16 | Druckraum | 53 | Maschinentisch |
| 17 | Ringansatz | 54 | Ausnehmung |
| 18 | Schräge | 55 | Anschlagring |
| 19 | Schräge | 56 | Kugelauflage |
| 20 | Schrägbohrung | 57 | Rohrgehäuse |
| 21 | Einsteckmodul | 58 | Ringkanal |
| 22 | Federhalteplatte | 59 | Verbindungsbohrung |
| 23 | Boden | 60 | Abdichtung |
| 24 | Luftspalt | 61 | Topfgehäuse |
| 25 | Einsteckmodul | 62 | Boden |
| 26 | Federhalteplatte | 63 | Federauflage |
| 27 | Kugelauflage | 64 | Topfgehäuse |
| 28 | Gewinde | 65 | Ringflansch |
| 29 | Dichtung | 66 | Deckel |
| 30 | Gehäuse | 67 | Sperrkugel |
| 31 | Boden | 68 | Dichtring |
| 32 | Fallbohrung | 69 | Dichtring |
| 33 | Einstich | 70 | Dichtung |
| 34 | Zentrale Ausnehmung | 71 | Dichtung |
| 35 | Werkstückpalette | 72 | Steigbohrung |
| 36 | Gewindestift | 73 | Schrägbohrung |
| 37 | Gewindeansatz | | |

## Patentansprüche

1. Schnellspannzylinder für allgemeine Verriegelungsaufgäben im Maschinenbau, um einen an einem beliebigen Teil angeordneten Einzugsnippel (2) zu verankern, wobei der Schnellspannzylinder einen verfahrbaren Kolben (3) und mit dem Einzugsnippel (2) verriegelbare Kugeln (5) umfasst und die funktionell wesentlichen Einbauten des Schnellspannzylinders als Einsteckmodul (21; 25) ausgebildet sind, welches modulartig in das Gehäuse (4) des Schnellspannzylinders eingesetzt werden kann,
**dadurch gekennzeichnet,**
**dass** das Einsteckmodul (21) eine vom Kolben (3) verschiedene Federhalteplatte (22; 26), eine Feder (8) und eine Kugelauflage (6; 27; 56), auf welcher die Kugeln (5) aufliegen, umfasst, sowie eine die Federhalteplatte (22; 26) und die Kugelaufläge (6; 27) zusammenhaltende Verbindung,
wobei die Federhalteplatte (22; 26) eine ringförmige Aufnahme für die eine Seite der Feder (8) ausbildet und sich das andere Ende der Feder (8) an der Unterseite der Kugelauflage (6; 27) anlegt, so dass die Feder (8) zwischen diesen beiden Teilen (22; 26, 6; 27) definiert fest gespannt ist und unter großer Vorspannung durch eine Schraube (7) oder ein Gewinde (28) festgehalten wird.

2. Schnellspannzylinder nach Anspruch 1, **dadurch gekennzeichnet, dass** die Verbindung für die Federhalteplatte (22; 26) und die Kugelauflage (6; 27) eine Schraubverbindung ist.

3. Schnellspannzylinder nach einem der Ansprüche 1 oder 2, **dadurch gekennzeichnet, dass** am Einsteckmodul (21, 25) noch eine innenliegende Dichtung (71) vorhanden ist, welche verhindert, dass Luft oder Schmutz in den Federraum der Feder (8) gelangt

4. Schnellspannzylinder nach einem der Ansprüche 1 bis 3, **dadurch gekennzeichnet, dass** das Einsteckmodul (21, 25) auch unmittelbar mit einem Adapter (43) verbunden ist, der mit einem Teil auf das Gewindeende der Schraube (7) aufgeschraubt ist, und der mit seinem anderen, zapfenartigen Ansatz wiederum in eine Bohrbuchse (40) eingreift.

5. Schnellspannzylinder nach Anspruch 4, **dadurch gekennzeichnet, dass** der Adapter (43) in einer Zentrierausnehmung (44) spielfrei an der Unterseite des Einsteckmoduls (21, 25) gelagert ist, um so ebenfalls eine spielfreie Zentrierung des Schnellspannzylinders auf einer zugeordneten Aufspannfläche zu erreichen.

6. Schnellspannzylinder nach einem der Ansprüche 1 bis 5, **dadurch gekennzeichnet, dass** die Oberseite des Schnellspannzylinders durch ein Abdeckblech (47) abgedeckt ist, und dieses durch einen entsprechenden Sicherungsring (14) gehalten wird.

7. Schnellspannzylinder nach einem der Ansprüche 1 bis 6, **dadurch gekennzeichnet, dass** eine zentrale Ausnehmung (34) des Schnellspannzylinders nach unten geöffnet ist, um so entweder einen Flüssigkeitsablauf nach unten zu gewährleisten, oder auch um entsprechend Luft oder Kühlmittel oder andere Medien von unten her zuzuführen.

8. Schnellspannzylinder nach einem der Ansprüche 1 bis 7, **dadurch gekennzeichnet, dass** der Innenumfang einer zentralen Ausnehmung (54) des Schnellspannzylinders direkt als Kolbendichtfläche und Kolbenlauffläche für den Kolben (3) verwendet wird, und dass in dieser zentralen, nach oben offenen Ausnehmung (54) das Einsteckmodul (21, 25) eingesteckt werden kann.

9. Schnellspannzylinder nach einem der Ansprüche 1 bis 8, **dadurch gekennzeichnet, dass** die zu sichernde Feder (8) direkt unterhalb der Kugelauflage (6) gehalten wird, und der Kolben (3) einerseits an einer radialen Aussenfläche der Kugelauflage (6) und andererseits an einer radialen Innenfläche einer zentralen Ausnehmung (54) des Schnellspannzylinders abgedichtet läuft.

10. Schnellspannzylinder nach einem der Ansprüche 1 bis 9, **dadurch gekennzeichnet, dass** in den Innenraum einer zentralen Ausnehmung (54) des Schnellspannzylinders ein Anschlagring (55) eingelegt wird, welcher als Anschlagfläche für den Kolben (3) dient.

11. Schnellspannzylinder nach einem der Ansprüche 1 bis 10, **dadurch gekennzeichnet, dass** im Innenraum des Gehäuses (4) der Kolben (3) verschiebbar angeordnet ist, wobei der Kolben (3) einen axial nach oben verlängerten Ringansatz (17) ausbildet, dessen radiale Außenflächen mit zugeordneten O-Ringen an der zugeordneten Innenwandung eines Deckels (1) anliegend und dort abgedichtet verschiebbar geführt sind.

12. Schnellspannzylinder nach Anspruch 11, **dadurch gekennzeichnet, dass** der untere Teil des Kolbens (3) radial erweitert ist und sich abgedichtet an den Innenumfang des Gehäuses (4) anlegt, sodass ein Druckraum (16) für das Öl zwischen der Unterseite des Deckels (1), dem Ringansatz des Kolbens (3) und dem Gehäuse (4) ausgebildet wird.

13. Schnellspannzylinder nach einem der Ansprüche 11 oder 12, **dadurch gekennzeichnet, dass** an der Innenseite des axialen Ringansatzes (17) des Kolbens (3) eine Vielzahl der Kugeln (5) anliegen, die von diesem Ringansatz entweder radial einwärts auf den Einzugsnippel (2) zugestellt oder von diesem weggestellt werden, wozu entsprechend Kugellaufbahnen auf der Kugelauflage (6) ausgebildet sind, die Vertiefungen für die Kugeln (5) bilden.

14. Schnellspannzylinder nach Anspruch 13, **dadurch gekennzeichnet, dass** im entriegelten Zustand des Schnellspannzylinders die Kugeln (5) in den vertieft angeordneten Kugelauflagen drinnen liegen, und demgemäss einen Abstand zu der Unterseite des Deckels (1) haben, und wenn jedoch ein radial auswärtsgerichteter Ansatz des Einzugsnippels (2) an einer der Kugeln (5) vorbeigelaufen ist, dann diese in eine vertiefte kugelförmige Ausnehmung auf der Oberfläche der Kugelauflage (6) hineinfällt.

15. Schnellspannzylinder nach Anspruch 14, **dadurch gekennzeichnet, dass** der radial auswärtsgerichtete Ansatz an der Unterseite des Einzugsnippels (2) für eine Bewegung der Kugel (5) in die Sperrrichtung in Verbindung mit dem Ringansatz (17) des Kolbens (3) sorgt.

16. Schnellspannzylinder nach einem der Ansprüche 1 bis 15, **dadurch gekennzeichnet, dass** der Schnellspannzylinder den Einzugsnippel (2, 2') selbsthemmend in dem Gehäuse (4) hält, so dass die Kugeln (5) eine Zwangsverriegelung mit dem Einzugsnippel (2, 2') eingehen.

17. Schnellspannzylinder nach einem der Ansprüche 1 bis 16, **dadurch gekennzeichnet, dass** der Schnellspannzylinder einen Blockverschluss bewerkstelligt, so dass die Verriegelung des Einzugsnippels (2, 2') unter der Kraft der Feder (8) erfolgt, welche die Kugeln (5) in ihrer Eingriffslage am Einzugsnippel (2, 2') drücken, und die Entsperrung des Schnellspannzylinders unter der Wirkung von Drucköl erfolgt, welches in den Zwischenraum zwischen der Unterseite eines Deckels (1) und der Oberseite des Kolbens (3) in das Gehäuse (4) eingeleitet wird.

18. Schnellspannzylinder nach einem der Ansprüche 1 bis 17, **dadurch gekennzeichnet, dass** die Kugeln (5) im Schnellspannzylinder im gesperrten Zustand in formschlüssiger Art einerseits angehobenen Flächen der Kugelauflage zugeordnet werden, und andererseits an der Unterseite eines Deckels (1) eingeklemmt werden, wodurch sie nicht mehr bewegbar sind, und sich in dieser Sperrstellung in definierter Weise in eine zugeordnete ringförmige Ausnehmung am Einzugsnippel (2, 2') anlegen, damit dieser absolut gesperrt und spielfrei festgehalten ist.

19. Schnellspannzylinder nach einem der Ansprüche 1 bis 18, **dadurch gekennzeichnet, dass** bei der Verriegelungsbewegung des Kolbens (3) zunächst im Schnellhub eine größere Schräge (18) sich an die Kugeln (5) anlegt und diese radial einwärts in Richtung auf den Einzugsnippel (2) bewegt, und, sobald sich die Kugeln (5) dann formschlüssig an der zugeordneten Schräge am Einzugsnippel (2) anlegen, sich auch eine weitere Schräge (19) am Umfang der Kugeln (5) anlegt, und mit dieser weiteren Schräge (19) die relativ große Federkraft der Feder (8) auf die Kugeln (5) übertragen wird, und zwar in einem Verhältnis von etwa 6,5:1, was heißt, die Federkraft der Feder (8) wird um etwa das 6,5-fache auf die Kugeln (5) übersetzt, die sich mit entsprechend großer Verriegelungskraft an den Einzugsnippel (2) anlegen.

20. Schnellspannzylinder nach einem der Ansprüche 1 bis 19, **dadurch gekennzeichnet, dass** durch die Ausbildung eines radial auswärtsliegenden, etwa ringförmigen und schmalen Druckraumes (16) für das Drucköl die gesamte Unterseite des Schnellspannzylinders von Drucköl freigehalten wird.

21. Schnellspannzylinder nach einem der Ansprüche 1 bis 20, **dadurch gekennzeichnet, dass** der zentrale Innenraum des Schnellspannzylinders von irgendwelchen Druckölräumen vollkommen frei ist und aus dem Innenraum entsprechende Ablassöffnungen herausgeführt sind, aus denen beispielsweise Bohrwasser, ein Späne und Verschmutzung tragendes Medium und dergleichen nach unten ablaufen kann.

22. Schnellspannzylinder nach einem der Ansprüche 1 bis 21, **dadurch gekennzeichnet, dass** ein aufschraubbaren Boden (23; 38) ein oder mehrere axial vorspringende Zapfen (39) ausbildet, welche in zugeordnete Bohrbuchsen (40) einer Lochrasterplatte eingreifen und damit den Schnellspannzylinder auf dieser Lochrasterplatte festlegen.

23. Schnellspannzylinder nach einem der Ansprüche 1 bis 22, **dadurch gekennzeichnet, dass** der Schnellspannzylinder auch versenkt in einer zentralen Ausnehmung im Maschinentisch versenkt eingebaut werden kann, und das Drucköl dann direkt radial im Maschinentisch an den in der zentralen Ausnehmung eingebauten Schnellspannzylinder von des Seite her eingeführt werden kann.

## Claims

1. A quick-acting clamping cylinder for general locking tasks in mechanical engineering in order to anchor a retractable nipple (2) that is arranged on any desired part, wherein the quick-acting clamping cylinder includes a movable piston (3) and balls (5) that are lockable in relation to the retractable nipple (2), and the functionally significant components of the quick-acting clamping cylinder take the form of an insertion module (21; 25) which can be inserted into the housing (4) of the quick-acting clamping cylinder in modular manner, **characterised in that**
the insertion module (21) includes a spring-holding plate (22; 26) that is different from the piston (3), a spring (8) and a ball seating (6; 27; 56) on which the balls (5) are supported, and a connection that holds the spring-holding plate (22; 26) and the ball seating (6; 27) together,
wherein the spring-holding plate (22; 26) forms an annular receptacle for the one side of the spring (8), and the other end of the spring (8) abuts against the underside of the ball seating (6; 27) such that the spring (8) is clamped fixedly in a defined manner between these two parts (22; 26, 6; 27) and is held fixed by a screw (7) or a thread (28) under a considerable bias.

2. A quick-acting clamping cylinder according to Claim 1, **characterised in that** the connection for the spring-holding plate (22; 26) and the ball seating (6; 27) is a screw connection.

3. A quick-acting clamping cylinder according to one of Claims 1 or 2, **characterised in that** there is further provided on the insertion module (21, 25) an internal seal (71) which prevents air or dirt from penetrating into the spring chamber of the spring (8).

4. A quick-acting clamping cylinder according to one of Claims 1 to 3, **characterised in that** the insertion module (21, 25) is also connected directly to an adapter (43) which by means of one part is screwed onto the threaded end of the screw (7) and which by means of its other, peg-like extension in turn engages in a bore liner (40).

5. A quick-acting clamping cylinder according to Claim 4, **characterised in that** the adapter (43) is mounted in a centring recess (44) in the underside of the insertion module (21, 25) without play, in order to achieve centring of the quick-acting clamping cylinder on an associated clamping surface likewise without play.

6. A quick-acting clamping cylinder according to one of Claims 1 to 5, **characterised in that** the upper side of the quick-acting clamping cylinder is covered by a cover plate (47), and the latter is held by a corresponding securing ring (14).

7. A quick-acting clamping cylinder according to one of Claims 1 to 6, **characterised in that** a central recess (34) of the quick-acting clamping cylinder is downwardly open in order in this way either to ensure that drainage of liquid is downwards or indeed correspondingly to supply air or coolant or other media from below.

8. A quick-acting clamping cylinder according to one of Claims 1 to 7, **characterised in that** the inner periphery of a central recess (54) of the quick-acting clamping cylinder is used directly as a piston sealing face and piston contact face for the piston (3), and **in that** the insertion module (21, 25) can be inserted into this central, upwardly open recess (54).

9. A quick-acting clamping cylinder according to one of Claims 1 to 8, **characterised in that** the spring (8) to be secured is held directly below the ball seating (6), and the piston (3) moves in sealed manner, on the one hand against a radial outer surface of the ball seating (6) and on the other against a radial inner surface of a central recess (54) of the quick-acting clamping cylinder.

10. A quick-acting clamping cylinder according to one of Claims 1 to 9, **characterised in that** there is inserted into the interior of a central recess (54) of the quick-acting clamping cylinder a stop ring (55) that serves as an abutment face for the piston (3).

11. A quick-acting clamping cylinder according to one of Claims 1 to 10, **characterised in that** the piston (3) is displaceably arranged in the interior of the housing (4), wherein the piston (3) forms an axially upwardly prolonged annular extension (17) whereof the radial outer surfaces are guided, together with associated O rings, abutting against the associated inner wall of a cover (1), and are displaceably guided in sealed manner there.

12. A quick-acting clamping cylinder according to Claim 11, **characterised in that** the lower part of the piston (3) is radially widened and abuts in sealed manner against the inner periphery of the housing (4) such that a pressurised space (16) is formed for the oil between the underside of the cover (1), the annular extension to the piston (3), and the housing (4).

13. A quick-acting clamping cylinder according to one of Claims 11 or 12, **characterised in that** a multiplicity of the balls (5) abut against the inner side of the axial annular extension (17) to the piston (3), and this annular extension either brings them radially inwards towards the retractable nipple (2) or moves them away therefrom, for which purpose ball races are correspondingly formed on the ball seating (6) and form recesses for the balls (5).

14. A quick-acting clamping cylinder according to Claim 13, **characterised in that**, in the unlocked condition of the quick-acting clamping cylinder, the balls (5) lie within the countersunk ball seatings and accordingly are at a spacing from the underside of the cover (1), but once a radially outwardly directed extension to the retractable nipple (2) has moved past one of the balls (5) then the latter falls into a recessed spherical cavity in the face of the ball seating (6).

15. A quick-acting clamping cylinder according to Claim 14, **characterised in that** the radially outwardly directed extension on the underside of the retractable nipple (2) ensures there is movement of the ball (5) in the blocking direction in conjunction with the annular extension (17) to the piston (3).

16. A quick-acting clamping cylinder according to one of Claims 1 to 15, **characterised in that** the quick-acting clamping cylinder holds the retractable nipple (2, 2') in the housing (4) with automatic locking, such that the balls (5) undergo a forced locking with the retractable nipple (2, 2').

17. A quick-acting clamping cylinder according to one of Claims 1 to 16, **characterised in that** the quick-acting clamping cylinder has the effect of immobilisation en bloc, such that the locking of the retractable nipple (2, 2') takes place under the force of the spring (8), which the balls (5) press against the retractable nipple (2, 2') when they are in their engagement position, and the unblocking of the quick-acting clamping cylinder takes place under the action of pressurised oil, which is introduced into the housing (4) in the intermediate space between the underside of a cover (1) and the upper side of the piston (3).

18. A quick-acting clamping cylinder according to one of Claims 1 to 17, **characterised in that** in the blocked condition the balls (5) in the quick-acting clamping cylinder are on the one hand associated, with positive engagement, with raised surfaces of the ball seating and on the other are clamped against the underside of a cover (1), as a result of which they are no longer movable, and in this blocked position they abut in a defined manner against the retraction nipple (2, 2') in an associated annular recess, so that the retraction nipple (2, 2') is absolutely blocked and is held without play.

19. A quick-acting clamping cylinder according to one of Claims 1 to 18, **characterised in that**, during the locking movement of the piston (3), initially in a rapid stroke, a relatively large oblique face (18) abuts against the balls (5) and moves them radially inwards towards the retractable nipple (2) and, as soon as the balls (5) abut against the retractable nipple (2), with positive engagement at the associated oblique face, a further oblique face (19) also abuts against the periphery of the balls (5), and by means of this further oblique face (19) the relatively great spring force of the spring (8) is transferred to the balls (5) at a ratio of approximately 6.5:1, which means that the spring force of the spring (8) is transmitted in a multiple of approximately 6.5 to the balls (5), which abut against the retractable nipple (2) with a correspondingly large locking force.

20. A quick-acting clamping cylinder according to one of Claims 1 to 19, **characterised in that** the formation of a radially outward, approximately annular and narrow pressurised space (16) for the pressurised oil has the effect of keeping the entire underside of the quick-acting clamping cylinder free of pressurised oil.

21. A quick-acting clamping cylinder according to one of Claims 1 to 20, **characterised in that** the central interior of the quick-acting clamping cylinder is completely free of any pressurised oil spaces, and corresponding drainage openings lead out of the interior, out of which there may downwardly drain for example drilling water, a medium carrying swarf and dirt, and similar.

22. A quick-acting clamping cylinder according to one of Claims 1 to 21, **characterised in that** a base (23; 38) which is connectable by being screwed on forms one or more axially projecting pegs (39) which engage in associated bore liners (40) in a perforated sheet and thus fix the quick-acting clamping cylinder on this perforated sheet.

23. A quick-acting clamping cylinder according to one of Claims 1 to 22, **characterised in that** the quick-acting clamping cylinder can also be installed in the machine bed in sunk manner, sunk in a central recess, and the pressurised oil can then be introduced from the side, directly radially in the machine bed, to the quick-acting clamping cylinder that is built into the central recess.

## Revendications

1. Cylindre à serrage rapide destiné à des applications de verrouillage générales en constructions mécaniques, permettant d'ancrer un raccord de serrage (2) disposé sur une pièce quelconque, ledit cylindre à serrage rapide comprenant un piston mobile (3) et des billes (5) blocables par le raccord de serrage (2), et les composants fonctionnels essentiels dudit cylindre à serrage rapide étant réalisés sous forme de module enfichable (21 ; 25) pouvant être mis en place de manière modulaire dans le corps (4) dudit cylindre à serrage rapide,
**caractérisé en ce que**
le module enfichable (21) comprend une plaque de retenue de ressort (22 ; 26) distincte du piston (3), un ressort (8) et un support de billes (6 ; 27 ; 56) sur lequel s'appuient les billes (5), ainsi qu'une connexion maintenant ensemble la plaque de retenue de ressort (22 ; 26) et le support de billes (6 ; 27),
la plaque de retenue de ressort (22 ; 26) formant un logement annulaire pour le premier côté du ressort (8) et l'autre extrémité du ressort (8) reposant contre la face inférieure du support de billes (6 ; 27), de sorte que le ressort (8) est serré de manière définie entre ces deux pièces (22 ; 26, 6 ; 27) et est maintenu par une vis (7) ou un filet (28) sous pré-contrainte élevée.

2. Cylindre à serrage rapide selon la revendication 1, **caractérisé en ce que** la connexion pour la plaque de retenue de ressort (22 ; 26) et le support de billes (6 ; 27) est une connexion à vis.

3. Cylindre à serrage rapide selon la revendication 1 ou 2, **caractérisé en ce qu'**un joint (71) intérieur est présenté en outre contre le module enfichable (21, 25), et empêche que de l'air ou de la saleté pénètrent dans le compartiment de ressort (8).

4. Cylindre à serrage rapide selon l'une des revendications 1 à 3, **caractérisé en ce que** le module enfichable (21, 25) est aussi directement raccordé à un adaptateur (43) qui est vissé par une partie sur l'extrémité de filet de la vis (7), et qui s'engage dans un canon de perçage (40) par son autre appendice en forme de tenon.

5. Cylindre à serrage rapide selon la revendication 4, **caractérisé en ce que** l'adaptateur (43) est monté sans jeu dans un évidement de centrage (44) sur la face inférieure du module enfichable (21, 25), pour obtenir ainsi également un centrage sans jeu du cylindre à serrage rapide sur une surface de serrage associée.

6. Cylindre à serrage rapide selon l'une des revendications 1 à 5, **caractérisé en ce que** la face supérieure du cylindre à serrage rapide est recouverte par une plaque de couverture (47), et **en ce que** celle-ci est maintenue par une bague de fixation (14) correspondante.

7. Cylindre à serrage rapide selon l'une des revendications 1 à 6, **caractérisé en ce qu'**un évidement central (34) du cylindre à serrage rapide est ouvert sur le bas, pour assurer ainsi soit un écoulement de liquide vers le bas, soit une amenée correspondante d'air, de réfrigérant ou d'un autre fluide par le bas.

8. Cylindre à serrage rapide selon l'une des revendications 1 à 7, **caractérisé en ce que** la circonférence intérieure d'un évidement central (54) du cylindre à serrage rapide est utilisée directement comme surface d'étanchéité de piston et surface de glissement du piston (3), et **en ce que** le module enfichable (21, 25) peut être inséré dans cet évidement central (54) ouvert sur le haut.

9. Cylindre à serrage rapide selon l'une des revendications 1 à 8, **caractérisé en ce que** le ressort (8) à fixer est maintenu directement sous le support de billes (6), et **en ce que** le piston (3) coulisse de manière étanche sur une surface radiale extérieure du support de billes (6) d'un côté, et sur une surface radiale intérieure d'un évidement central (54) du cylindre à serrage rapide de l'autre côté.

10. Cylindre à serrage rapide selon l'une des revendications 1 à 9, **caractérisé en ce qu'**une bague de butée (55) servant de surface de butée pour le piston (3) est mise en place à l'intérieur d'un évidement central (54) du cylindre à serrage rapide.

11. Cylindre à serrage rapide selon l'une des revendications 1 à 10, **caractérisé en ce que** le piston (3) est logé de manière coulissante à l'intérieur du corps (4), ledit piston (3) formant un appendice annulaire (17) prolongé axialement vers le haut, dont les surfaces radiales extérieures s'appuient par des joints toriques associés contre la paroi intérieure correspondante d'un couvercle (1) et y coulissent de manière étanche.

12. Cylindre à serrage rapide selon la revendication 11, **caractérisé en ce que** la partie inférieure du piston (3) présente une extension radiale, et s'appuie de manière étanche contre le contour intérieur du corps (4), de manière à former une chambre de pression (16) pour l'huile entre la face inférieure du couvercle (1), l'appendice annulaire du piston (3) et le corps (4).

13. Cylindre à serrage rapide selon la revendication 11 ou 12, **caractérisé en ce qu'**une pluralité de billes (5) s'appuient sur la face intérieure de l'appendice annulaire (17) axial du piston (3), lesquelles sont soit avancées radialement vers l'intérieur vers le raccord de serrage (2) par ledit appendice annulaire, soit éloignées de celui-ci, des chemins de roulement de billes formant des évidements pour les billes (5) étant prévus en conséquence sur le support de billes (6).

14. Cylindre à serrage rapide selon la revendication 13, **caractérisé en ce qu'**en état déverrouillé du cylindre à serrage rapide, les billes (5) reposent à l'intérieur du support de billes disposé en profondeur, et sont pas conséquent espacées de la face inférieure du couvercle (1), et **en ce que**, si un appendice dirigé radialement vers l'extérieur du raccord de serrage (2) passe devant une des billes (5), celle-ci tombe toutefois dans un évidement sphérique disposé en profondeur à la surface du support de billes (6).

15. Cylindre à serrage rapide selon la revendication 14, **caractérisé en ce que** l'appendice dirigé radialement vers l'extérieur sur la face inférieure du raccord de serrage (2) assure un déplacement de la bille (5) dans la direction de blocage, en liaison avec l'appendice annulaire (17) du piston (3).

16. Cylindre à serrage rapide selon l'une des revendications 1 à 15, **caractérisé en ce que** ledit cylindre à serrage rapide maintient le raccord de serrage (2, 2') de manière autobloquante dans le corps (4), de sorte que les billes (5) sont soumises à un verrouillage forcé avec le raccord de serrage (2, 2').

17. Cylindre à serrage rapide selon l'une des revendications 1 à 16, **caractérisé en ce que** ledit cylindre à serrage rapide provoque une obturation par bloc, de sorte que le verrouillage du raccord de serrage (2, 2') est effectué sous la force du ressort (8) serrant les billes (5) dans leur position de contact sur le raccord de serrage (2, 2'), et **en ce que** le déblocage du cylindre à serrage rapide est obtenu sous l'effet d'huile sous pression introduite dans le corps (4), dans l'interstice entre la face inférieure d'un couvercle (1) et la face supérieure du piston (3).

18. Cylindre à serrage rapide selon l'une des revendications 1 à 17, **caractérisé en ce que** les billes (5) du cylindre à serrage rapide sont associées à des élévations du support de billes en état de blocage par correspondance de forme, d'un côté, et serrées contre la face inférieure d'un couvercle (1) de l'autre côté, ce qui les empêche de se mouvoir, et **en ce que** dans cette position de blocage elles reposent de manière définie dans un évidement annulaire correspondant sur le raccord de serrage (2, 2'), pour que celui-ci soit maintenu parfaitement bloqué sans aucun jeu.

19. Cylindre à serrage rapide selon l'une des revendications 1 à 18, **caractérisé en ce que** lors du mouvement de verrouillage du piston (3) en course rapide, un biseau principal (18) est d'abord appliqué contre les billes (5) et déplace celles-ci radialement vers l'intérieur, dans la direction du raccord de serrage (2), et **en ce que**, dès que les billes (5) s'appuient ensuite par correspondance de fore contre le biseau correspondant sur le raccord de serrage (2), un autre biseau (19) est appliqué sur le contour des billes (5), cet autre biseau (19) transmettant aux billes (5) la force relativement élevée du ressort (8) suivant un rapport d'environ 6,5 : 1, ce qui signifie que la force du ressort (8) est démultipliée d'environ 6,5 fois vers les billes (5) qui s'appuient contre le raccord de serrage (2) avec une force de verrouillage élevée en conséquence.

20. Cylindre à serrage rapide selon l'une des revendications 1 à 19, **caractérisé en ce que** la formation d'une chambre de pression (16) radialement extérieure, sensiblement annulaire et étroite pour l'huile sous pression, libère d'huile sous pression toute la face inférieure du cylindre à serrage rapide.

21. Cylindre à serrage rapide selon l'une des revendications 1 à 20, **caractérisé en ce que** le compartiment intérieur central du cylindre à serrage rapide est totalement exempt de chambres d'huile sous pression quelconques, et **en ce que** des ouvertures d'évacuation correspondantes partent du compartiment intérieur, laissant notamment s'écouler vers le bas de l'huile de coupe, un fluide porteur de copeaux et de saletés et autres.

22. Cylindre à serrage rapide selon l'une des revendications 1 à 21, **caractérisé en ce qu'**un fond (23 ; 38) vissable forme un ou plusieurs tenons (39) saillants axialement qui s'engagent dans des canons de perçage (40) correspondants d'une plaque perforée en fixant ainsi le cylindre à serrage rapide sur ladite plaque perforée.

23. Cylindre à serrage rapide selon l'une des revendications 1 à 22, **caractérisé en ce que** ledit cylindre à serrage rapide peut aussi être monté de manière noyée dans un évidement central de la table de machine, et **en ce que** l'huile sous pression peut alors être amenée radialement par le côté directement sur le cylindre à serrage rapide monté dans l'évidement central de la table de machine.
